**Europäisches Patentamt**

**European Patent Office**

**Office européen des brevets**

(19)

(11) Veröffentlichungsnummer: **0 069 831**
**B1**

(12) # EUROPÄISCHE PATENTSCHRIFT

(45) Veröffentlichungstag der Patentschrift:
02.07.86

(21) Anmeldenummer: 82103198.6

(22) Anmeldetag: 16.04.82

(51) Int. Cl.⁴: **H 04 L  9/00,** H 03 M  5/00,
H 03 M  7/00, G 06 F  5/00

(54) Verfahren zur Verhinderung von "kompromittierender Abstrahlung" bei der Verarbeitung und Übertragung geheimer Dateninformationen.

(30) Priorität: 15.07.81  DE 3127843

(43) Veröffentlichungstag der Anmeldung:
19.01.83 Patentblatt 83/3

(45) Bekanntmachung des Hinweises auf die Patenterteilung:
02.07.86 Patentblatt 86/27

(84) Benannte Vertragsstaaten:
CH DE GB LI NL

(56) Entgegenhaltungen:
DE-A-2 838 600

IBM TECHNICAL DISCLOSURE BULLETIN, Vol. 22,
No. 8B, January 1980, New York, US L. BALLIET et
al. "Four/six-block transmission code" Seiten 3547-
3550

(73) Patentinhaber: ANT Nachrichtentechnik GmbH,
Gerberstrasse 33, D-7150 Backnang (DE)

(72) Erfinder: Glitz, Ekkehard, Ing. grad.,
Stresemannstrasse 26/4, D-7150 Backnang (DE)

(74) Vertreter: Schickle, Gerhard, Dipl.- Ing., ANT
Nachrichtentechnik GmbH Patent- und
Lizenzabteilung Gerberstrasse 33, D-7150
Backnang (DE)

## Beschreibung

Geheime Informationen werden bei der Übertragung durch kryptografische Verfahren vor unbefugtem Zugriff geschützt. Diese Verfahren wurden in jüngster Zeit mathematisch und technisch so weit entwickelt, daß sie als "unknackbar" gelten, oder die Dechiffriersicherheit der Verfahren kalkulierbar geworden ist. Dem Abhörer verschlüsselter Informationen ist es nicht mehr möglich, ohne Kenntnis des Schlüsselmaterials eine Dechiffrierung durchzuführen. Der Abhörer kann sich jedoch noch anderer Methoden der Informationsbeschaffung bedienen: der Auswertung optischer, akustischer, elektrischer oder elektromagnetischer Abstrahlung der Geräte eines Systems, welches Informationen verarbeitet, verschlüsselt und überträgt. Deshalb sind hohe Aufwendungen notwendig, wenn Verarbeitungszentren abhörsicher in geschirmten Räumen aufgebaut werden müssen. Datenverarbeitungszentren stehen über verschiedene "Kanäle" mit der Umwelt in Verbindung und jeder "Kanal" kann außerhalb des geschützten Bereichs von einem Abhörer angezapft werden. Der Begriff "Kanal" wird hier im nachrichtentechnischen Sinne verstanden, und es wird noch unterschieden zwischen Nachrichtenkanälen, in welchen beabsichtigt Information transportiert wird (z.B. Telefonleitung oder Funkstecke), und solchen Kanälen, in welchen unbeabsichtigt Information transportiert wird (z.B. Netzleitung, Wasserleitung, Fenster usw.).

Dateninformationen werden meist als elektrische Signale beabsichtigt und unbeabsichtigt weitergeleitet. (Ausnahme optische Nachrichtenübertragung). Dabei wird das Signal nicht nur in seiner ursprünglichen Signalform, sondern auch in modulierter Form (AM, FM) gewollt oder ungewollt übertragen. Wird das Signal auf einen Hochfrequenzträger aufmoduliert, so breitet es sich sowohl durch Raumstrahlung als auch auf allen elektrischen Leitungen aus. Ist das Ursprungssignal eine geheime Dateninformation, bezeichnet man die unerwünschte Ausbreitung und Weiterleitung als "kompromittierende Abstrahlung".

Da die "kompromittierende Abstrahlung" die Wirksamkeit von Chiffriergeräten unterlaufen kann, werden Chiffriergeräte besonders sorgfältig auf "kompromittierende Abstrahlung" geprüft, und es sind viele technische Aufwendungen notwendig um die "kompromittierende Abstrahlung" zu verhindern.

Aus der DE-A1- 2 838 600 ist ein Mosaikdrucker bekannt, bei dem die kompromittierende Abstrahlung auf der physikalischen Ebene kompensiert wird. Dazu dient eine Kompensationseinrichtung, die den Antrieben eines Mosaikdruckers physikalisch nachgebildet ist, räumlich den Antrieben benachbart angeordnat ist und gleichzeitig mit den Antrieben für den Mosaikdrucker anschaltbar ist. Außerdem ist eine Umschalteinrichtung zwischen Antrieb und Kompensationseinheiten vorhanden, die über einen Zufallsgenerator ansteuerbar ist.

In der Zeitschrift IBM Technical Disclosure Bulletin, Vol. 22, No. 8B, January 1980, New York, US, S. 3547 bis 3550, ist ein spezieller Übertragungscode mit der gleichen zuzahl von Nullen und Einsen beschrieben, der die Gleichstromkomponente unterdrückt und die Übertragungsbandbreite nur geringfügig erhöht.

Der Erfindung liegt die Aufgabe zugrunde, ein Verfahren anzugeben, mit dem Systeme zur geheimen Datenverarbeitung und Datenfernübertragung, frei von "kompromittierender Abstrahlung", auf einfache, wenig Aufwand erfordernde Weise hergestellt werden können.

Die Aufgabe wird gelöst, wie im Anspruch 1 beschrieben. Die Unteransprüche geben vorteilhafte Weiterbildungen an.

Im folgenden sei die Erfindung beispielhaft für zweiwertige Datensignale beschrieben. Als typisches Anwendungsbeispiel sei ein Datenverschlüsselungsgerät gewählt.

Figur 1 zeigt das Prinzip-Blockschaltbild eines solchen Datenverschlüsselungsgerätes, an Hand dessen die verwendeten Begriffe erläutert werden sollen.

Figur 2 zeigt ein prinzipielles Funktions-Blockschaltbild eines Datenverschlüsselungsgerätes mit Mikroprozessorsteuerung.

Figur 3 zeigt das Prinzip-Blockschaltbild eines Datenverschlüsselungsgerätes mit Codewandlern gemäß der Erfindung.

Figur 4 zeigt das Prinzip-Blockschaltbild eines Codewandlers Version A.

Figur 5 zeigt das Prinzip-Blockschaltbild eines Codewandlers Version B.

Figur 6 zeigt das Prinzip-Blockschaltbild eines Codewandlers Version C.

Figur 7 zeigt das Zeitablaufdiagramm und binäre Verteilung eines Codewandlers nach Fig. 6.

Figur 8 zeigt die Wahrheitstabelle der Codewandlung nach Version C.

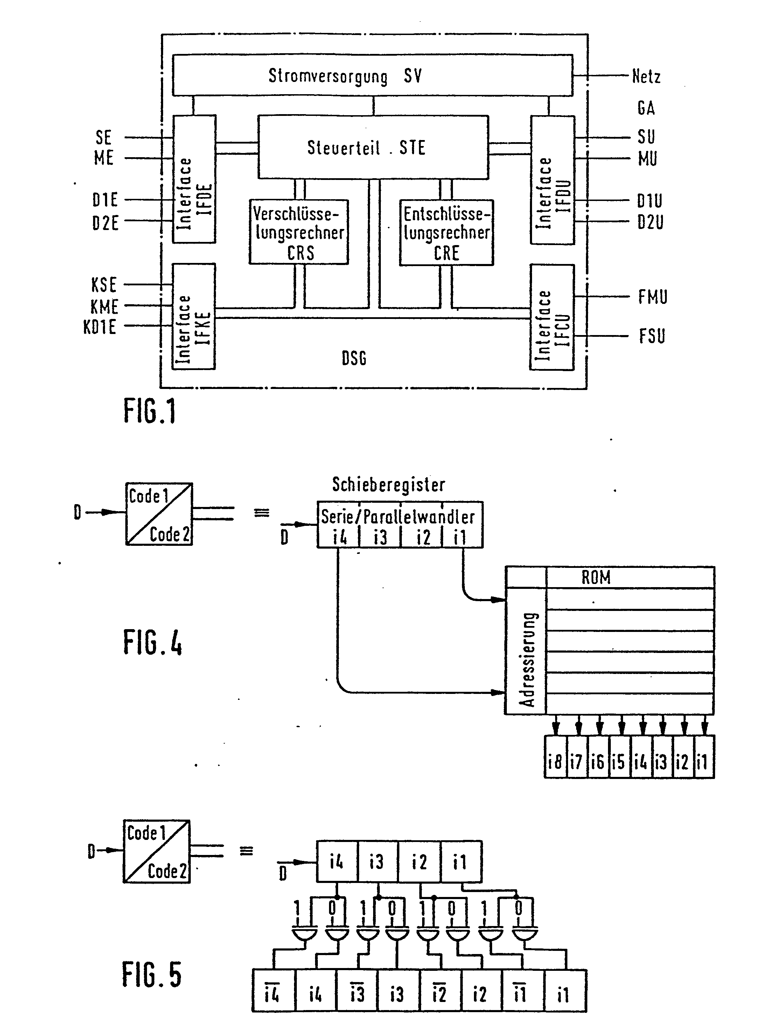

Erläuterung der in Fig. 1 verwendeten Begriffe:

**Kurzzeichen Bedeutung des Begriffs Signalklasse**

DSG Datenschlüsselgerät
STE Steuerteil schwarz/rot
SV Stromversorgung schwarz
CRS Cryptorechner Sendeseite rot/schwarz
CRE Cryptorechner Empfangsseite schwarz/rot
IFDE Interface zum Datenendgerät rot
IFDU Interface zum Datenübertragungs-Gerät schwarz
IFKE Interface Schlüsseleingabe rot
IFCU Interface Fernbedienung schwarz

**Kurzzeichen Bedeutung des Begriffs Signalklasse**

Netz Speisespannung vom Netz schwarz
GA Gehäuseanschluß schwarz
SE Steuerleitungen zum Gerät schwarz
ME Meldeleitungen vom Gerät schwarz
SU Steuerleitungen vom Gerät schwarz

MU Meldeleitungen zum Gerät schwarz

D1E Klartextdaten zum Gerät rot

D2E Klartextdaten vom Gerät rot

D1U Kryptodaten zur Übertragung schwarz

D2U Kryptodaten von der Übertragung schwarz

KD1E Schlüsseldaten zum Gerät rot

KSE Steuerleitung Schlüssel zum Gerät rot

KME Meldeleitung Schlüssel vom Gerät rot

FSU Steuerleitung Fernbedienung zum Gerät schwarz

FMU Meldeleitung Fernüberwachung vom schwarz Gerät

Die Schaltungsteile und Signalleitungen nach Fig. 1 können in zwei Signalklassen eingeteilt werden:

rote Signale: Geheime Information wird verarbeitet und transportiert. Zugriff für Unbefugte muß verhindert werden.

schwarze Signale: Zu diesen Signalen kann jeder zugreifen.

Daraus folgt: Schwarze Signale auf Leitungen oder Geräteteilen müssen von den roten Signalen getrennt, isoliert und entkoppelt werden.

Die Gefahr der Verkopplung von rot und schwarz ist vor allem verursacht durch:

a) induktives Übersprechen

b) kapazitives Übersprechen

c) gemeinsame Stromversorgungen

d) unsymmetrische Signale mit gemeinsamem elektrischen Bezugspunkt.

Folgende Maßnahmen zur Entkopplung von schwarz und rot sind bekannt:

1. Schirmung, hochfrequente Abdichtung

2. Filtermaßnahmen

3. Galvanische Trennung

3.1 Relais

3.2 Übertrager

3.3 Optokoppler

Die genannten Maßnahmen erfordern aufwendige konstruktive Anstrengungen und müssen sorgfältig aufeinander abgestimmt werden. Die erforderlichen Kontrollmessungen und die Rückkopplung der Ergebnisse auf die Konstruktion sind sehr langwierig und teuer.

Die Lösung gemäß der Erfindung beschränkt die obengenannten teueren Maßnahmen auf ein Minimum und wirkt auf der Ebene der logischen Verarbeitung der Information.

Das erfindungsgemäße Verfahren ist kein Verschlüsselungsverfahren, es dient lediglich dazu, die physikalischen Signale, welche das Verarbeitungs- bzw. Übertragungssystem abstrahlt, so zu gestalten, daß keine Information daraus entnehmbar ist. Dies wird dadurch erreicht, daß die zu schützenden Informationen logisch so aufbereitet (codiert) werden, daß die Summe der Wertigkeit "0" und "1" in Raum und Zeit gleich verteilt wirken. Mit anderen Worten: zu jedem Zeitpunkt der Verarbeitung oder des Transports ist die Summe der Nullen gleich der Summe der Einsen und die Summe der bis zu einem beliebigen Zeitpunkt aufsummierten Nullen gleich der Summe der bis zu diesem Zeitpunkt gesammelten Einsen. Das bedeutet, daß z.B. ein Informationsdatenwort a mit 4 Bit durch Hinzufügen des invertierten Datenworts ā als Scheininformation mit 4 Bit zu einem 8-Bit-Datenwort ergänzt und parallel verarbeitet wird. Außerdem läßt sich durch bestimmte Codierungsverfahren erreichen, daß zeitlich aufeinanderfolgende Datenwörter sich in ihrer resultierenden Spannung oder ihrem resultierenden Strom nicht mehr unterscheiden, so daß aus der nach außen dringenden Abstrahlung keine Information entnehmbar ist.

Bei serieller Verarbeitung oder seriellem Transport werden mindestens zwei Kanäle verwendet, so daß in einem Kanal z.B. der Original-Datenstrom und im anderen Kanal der invertierte Datenstrom übertragen wird. Dann tritt zu jedem Zeitpunkt räumlich mit jedem Datenbit auch das invertierte Datenbit auf.

Erläuterungen:

Die Informationseinheit ist das Bit (binary digit). Das Bit wird zweiwertig dargestellt mit "0" und "1"; "Strom" und kein "Strom"; "niedrige Spannung" und "hohe Spannung".

Die Information kann bitseriell transportiert werden, z.B. über eine Schnittstelle nach CCITT-Empfehlung V.24 und einem geeigneten Datenübertragungsweg. Die Information kann bitparallel dargestellt und verarbeitet werden. Ein besonders häufiger Anwendungsfall ist die Darstellung in 8 Bit parallel (1 Byte). Ein Transportsystem für Informationen in bitparalleler Arbeitsweise heißt "Datenbus".

Ein 8-Bit-Datenbus für Mikroprozessorsysteme heißt "Standarddatenbus". Ein Adreßbus ist ein Transportsystem für Steuerinformationen zur Auswahl und Aktivierung von Systemkomponenten und Speicheradressen.

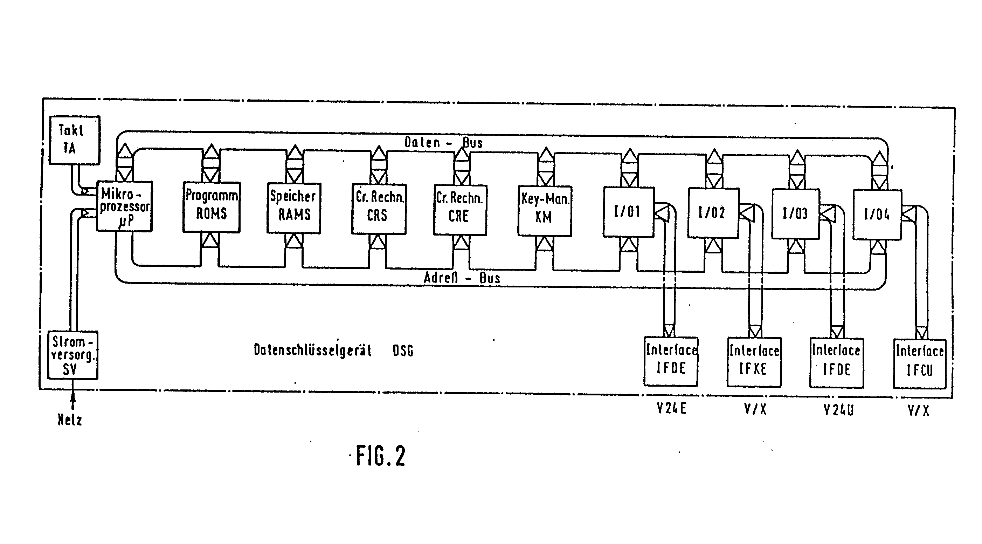

Fig. 2 zeigt das prinzipielle Funktionsblockschaltbild eines Datenverschlüsselungsgerätes mit Mikroprozessorsteuerung. Der Mikroprozessor µP, gespeist von Taktquelle TA und Stromversorgung SV, ist mit seinen peripheren Schaltungen über den Datenbus und den Adreßbus verbunden. Über den Adreßbus werden die peripheren Komponenten aufgerufen und aktiviert. Auf dem Datenbus wird die Information hin und her transportiert.

Im Beispiel des Datenschlüsselgerätes nach Fig. 2 sind folgende Elemente eingesetzt:

Programm-ROM: Im Programmspeicher (Read Only Memory) ist das die spezielle Aufgabe lösende Arbeitsprogramm abgespeichert.

Arbeitsspeicher-RAM: Im Arbeitsspeicher werden die Voraussetzungen, die Zwischenergebnisse und Endergebnisse des Arbeitsprozesses abgespeichert.

Cryptorechner CRS/CRE: Im Cryptorechner CRS werden Informationen verschlüsselt, in CRE entschlüsselt.

Key-Management KM: Hier werden die Schlüsseleinstellbedingungen für die Cryptorechner gespeichert und aufbereitet.

Input/Output I/01...I/04: Hier werden Informationen und Befehle aus der angeschalteten Peripherie hereingenommen, (auf den Bus gebracht) bzw. verarbeitete Informationen und Meldungen nach außen abgegeben.

Interface: Im Interface wird die Umwelt über vereinbarte Schnittstellenbedingungen angeschlossen.

IFDE: Interface zur Datenendeinrichtung. Klartext wird hereingenommen zur verschlüsselten Übertragung bzw. nach Entschlüsselung ausgegeben.

IFKE: Interface Key-Input. Schlüsselinformation wird eingegeben.

IFDU: Interface zur Datenübertragung. Verschlüsselte Information wird zur Übertragung ausgegeben, bzw. vor der Übertragung hereingenommen.

IFCU: Interface zur Fernsteuerung und Fernüberwachung des Gerätes.

Signalleitungen von IFDE und IFKE gehören der Signalklasse "rot" an, Signalleitungen IFDU, IFCU und Netz der Signalklasse "schwarz".

Das Problem liegt nun darin, daß die schwarzen Signalleitungen ebenso wie die roten Signalleitungen mit dem gemeinsamen Datenbus physikalisch in Verbindung stehen. Zwar ist im Programm logisch festgelegt, zu welchen Zeitpunkten nur "rot" oder nur "schwarz" auf das zugehörige Interface durchgreifen kann, jedoch ist die Gefahr der unbeabsichtigten Verkopplung zwischen "rot" und "schwarz", vor allem im hochfrequenten Bereich, in dieser Technik nicht zu vermeiden. Deshalb besteht die Aufgabe, die unvermeidbaren Intermodulationsprodukte zwischen roten und schwarzen Signalen so zu gestalten, daß bei einer Analyse der abgestrahlten Intermodulationsanteile im Raum und auf den schwarzen Signalleitungen kein Rückschluß auf die roten Signale möglich ist.

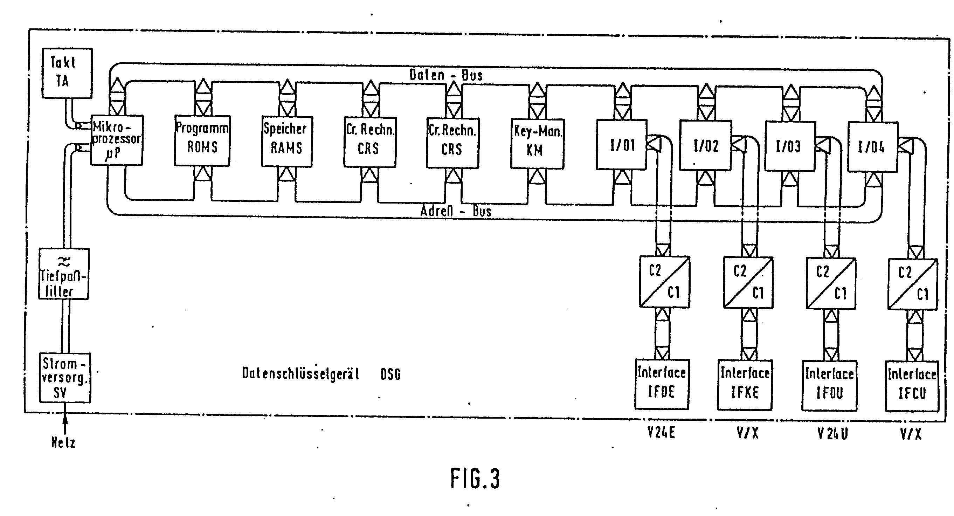

In Fig. 3 ist das Datenschlüsselgerät der Fig. 2 im Interface-Bereich mit Codewandlern C1/C2 gemäß der Erfindung ausgestattet. Mit diesen Maßnahmen wird erreicht, daß die Informationen in einem gleichgewichtigen Code verarbeitet werden können. In einem solchen Code hat jedes Wort nach außen hin das gleiche Gewicht oder Erscheinungsbild und verhindert somit bei der Anlayse einen Rückschluß auf die verarbeiteten Informationen.

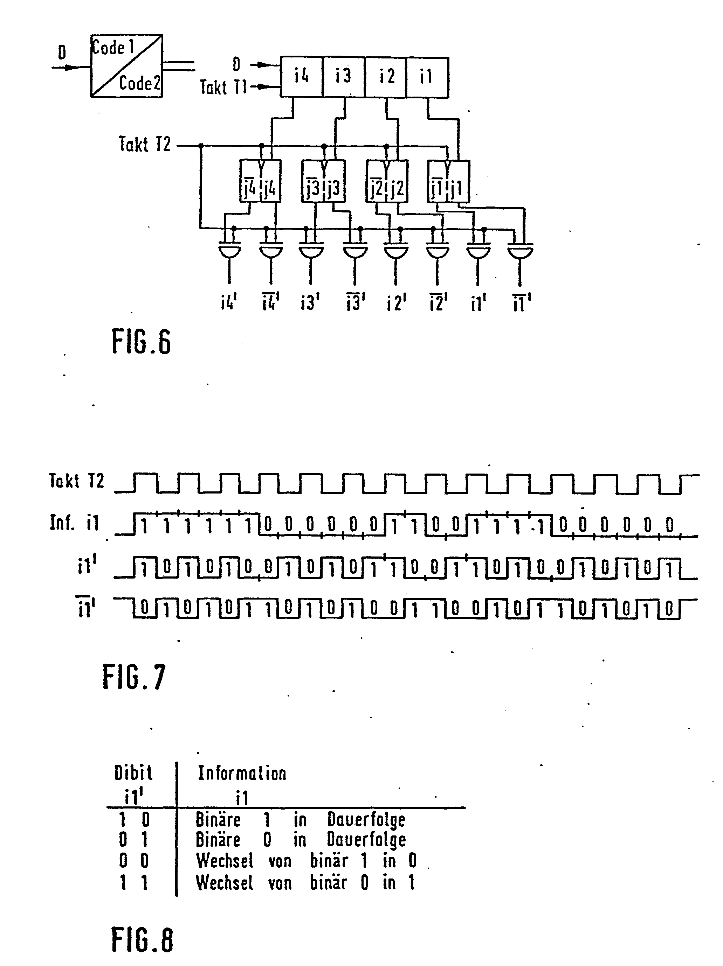

Fig. 4 zeigt das Prinzipblockschaltbild eines Codewandlers der Version A. Die Daten D werden in bitserieller Darstellung in einem Schieberegister serienparallel gewandelt. Die Informationen in paralleler Darstellung im Code 1 werden zur Adressierung eines Read Only Memory verwendet. Im ROM sind entsprechend dem Umfang des Codes 1 die entsprechenden gleichgewichtigen Worte im Code 2 bereitgestellt.

Fig. 5 zeigt das Prinzipblockschaltbild eines Codewandlers der Version B. Die Daten werden nach der Serien-Parallelwandlung durch Komplementbildung im Code gewandelt. Im Beispiel werden i1...i4 über Exclusiv- Oder-Schaltungen ergänzt zum Wort i1, ī1, i2, ī2, i3, ī3, i4, ī4.

In den Fig. 6, 7, 8 sind Prinzip und Wirkungsweise von Codewandlern der Version C dargestellt. In Ergänzung zu den Versionen A und B wird bei C auch die Gleichverteilung über die Zeit hergestellt. Auch wenn Daten mit extremer Unsymmetrie eingegeben werden, wie z.B. Pausenzeiten, wird aus einer Dauer - "0" eine gleichverteilte "0" - "1"-Folge hergestellt. Nach der Wahrheitstabelle in Fig. 8 kann die Codierung so aussehen:

**Dibit Information**
10 binäre "1" in Dauerfolge
01 binäre "0" in Dauerfolge
00 Wechsel binäre 1 in 0
11 Wechsel binäre 0 in 1

Fig. 7 zeigt den beispielhaften zeitlichen Ablauf einer Codewandlung nach Version C, wobei gleichzeitig mit i1 auch das Komplement ī1 gebildet wird.

Fig. 6 zeigt ein Realisierungsbeispiel eines derartigen Codewandlers.

**Patentansprüche**

1. Verfahren zur Verhinderung von "kompromittierender Abstrahlung" bei der Verarbeitung und Übertragung geheimer Dateninformationen in Systemen der Datenverarbeitung und Datenfernübertragung, dadurch gekennzeichnet, daß in Ergänzung einer direkt physikalisch wirkenden Abschirmung oder Entkopplung ein indirekt in der Ebene der logischen Verarbeitung der Information wirkender Codewandler verwendet wird, der die Daten so aufbereitet, daß zu jedem Zeitpunkt der Verarbeitung oder des Transports und über einen Zeitabschnitt während der Verarbeitung oder des Transports die Summe der Wertigkeiten "0" und "1" gleich groß sind, so daß dadurch praktisch keine "kompromittierende Abstrahlung" entsteht, da die nach außen dringenden physikalischen Signale keine analysierbare Information mehr enthalten.

2. Verfahren nach Anspruch 1, dadurch gekennzeichnet, daß der Codewandler außerdem die Daten so aufbereitet, daß zu jedem Zeitpunkt die Anzahl der Signalwechsel von "0" nach "1" gleich der Anzahl der Signalwechsel von "1" nach "0" ist.

3. Verfahren nach Anspruch 2, dadurch gekennzeichnet, daß der Codewandler zu den Informationsdatenbits jeweils das invertierte Datenbit als Scheininformation bildet und beide Datenbits zu einem Wort zusammenfaßt und bitparallel weiterverarbeitet bzw. transportiert, wobei die bitserielle Verarbeitung bzw. der Transport der einzelnen Wörter in zwei Kanälen erfolgt, so daß die Information in einem Kanal und die Scheininformation im anderen Kanal in der Weise wirkt, daß räumlich immer mit jedem Datenbit das invertierte Datenbit auftritt.

4. Verfahren nach einem der Ansprüche 1 bis 3, dadurch gekennzeichnet, daß die Informationsdatenbits in Daten-Dibits umgewandelt werden und daß eine binäre Dauerfolge "1" in eine Folge von Dibits "10" bzw. eine binäre Dauerfolge "0" in eine Folge von Dibits "01" umgewandelt wird.

5. Verfahren nach einem der Ansprüche 1 bis 4 dadurch gekennzeichnet, daß die Verarbeitung der Dateninformation byteseriell mit 4 Bit Nutzinformation und 4 Bit Scheininformation oder mit 8 Bit Nutzinformation und 8 Bit Scheininformation erfolgt.

## Claims

1. Method for the prevention of "compromising radiation" in the processing and transmission of secret data information in systems of the data processing and long range transmission of data, characterised thereby, that in augmentation of a directly physically acting screening or decoupling, a code converter is used, which acts indirectly in the plane of the logical processing of the information and so prepares, the data that the sums of the valences "0" and "1" are equal at each instant of the processing or of the transport and over a time section during the processing or the transport so that thereby practically no "compromising radiation" arises, since the physical signals penetrating outwardly no longer contain analysable information.

2. Method according to claim 1, characterised thereby, that the code converter beyond that so prepares the data that the number of the signal changes from "0" to "1" is equal to the number of the signal changes from "1" to "0" at each instant.

3. Method according to claim 2, characterised thereby, that tha code converter adds to each of the information data bits the respective inverted data bit as dummy information bit and combines both data bits into a word and processes them further or transports them bitparallel, wherein the bit-serial processing or the transport of the individual words takes place in two channels so that the information acts in one channel and the dummy information in the other channel in such a manner that the inverted data bit always occurs spatially with each data bit.

4. Method according to one of the claims 1 to 3, characterised thereby, that the information data bits are converted into data dibits and that a binary continuous sequence of "1" is converted into a sequence of dibits "10" or a binary continuous sequence of "0" into a sequence of dibits "01".

5. Method according to one of the claims 1 to 4, characterised thereby, that the processing of the information takes place byteserially with 4 bits of useful information and 4 bits of dummy information or with 8 bits of useful information and 8 bits of dummy information.

## Revendications

1. Procédé pour empêcher le "rayonnement compromettant" lors du traitement et de la transmission de données contenant des informations secrètes dans des systèmes de traitement de données et de télétransmission de données, caractérisé en ce que, en complément à un blindage ou un découplage à action physique directe, on emploie un convertisseur de code travaillant indirectement au niveau du traitement logique de l'information, qui prépare les données de manière qu'à chaque instant du traitement ou du transport et sur une période pendant le traitement ou le transport, les sommes des valeurs significatives "0" et "1'" soient d'égale grandeur, de sorte qu'il ne se produit ainsi pratiquement aucun "rayonnement compromettant" puisque les signaux physiques transperçant à l'extérieur ne contiennent plus d'information analysable.

2. Procédé selon la revendication 1, caractérisé en ce que, en plus, le convertisseur de code prépare les données de manière qu'à chaque instant, le nombre des changements de signal de "0" à "1" soit égal au nombre des changements de signal de "1" à "0".

3. Procédé selon la revendication 2, caractérisé en ce que, le convertisseur de code forme pour chaque bit d'information le bit inversé comme fausse information, réunit les deux bits en un mot et les traite ensuite ou les transporte en parallèle par bit, le traitement respectivement le transport en série par bit des différents mots s'effectuant en deux canaux, de sorte que l'information agit dans un canal et la fausse information agit dans l'autre canal, de manière qu'avec chaque bit d'information se présente toujours, dans l'espace, un bit inversé.

4. Procédé selon une des revendications 1 à 3, caractérisé en ce que, les bits d'information sont transformés en dibits et qu'une suite binaire continue "1" est transformée en une suite de dibits "10", respectivement qu'une suite binaire continue "0" est transformée en une suite de dibits "01".

5. Procédé selon une des revendications 1 à 3, caractérisé en ce que, le traitement des données s'effectue en série par multiplet à 4 bits d'information utile et 4 bits de fausse information ou à 8 bits d'information ultile et 8 bits de fausse information.

FIG.1

FIG.4

FIG.5

Takt
TA

Daten – Bus

Mikroprozessor
µP

Programm
ROMS

Speicher
RAMS

Cr. Rechn.
CRS

Cr. Rechn.
CRE

Key-Man.
KM

I/01

I/02

I/03

I/04

Adreß – Bus

Stromversorg.
SV

Datenschlüsselgerät    DSG

Interface
IFDE

Interface
IFKE

Interface
IFDE

Interface
IFCU

Netz

V24E

V/X

V24U

V/X

·FIG.2

FIG.3

FIG.6

FIG.7

| Dibit | Information |
|-------|-------------|
| i1' | i1 |
| 1  0 | Binäre  1  in  Dauerfolge |
| 0  1 | Binäre  0  in  Dauerfolge |
| 0  0 | Wechsel  von  binär 1  in  0 |
| 1  1 | Wechsel  von  binär 0  in  1 |

FIG.8